# FASCICULE DE BREVET EUROPEEN

(11) **EP 2 072 465 B1**
(45) Date de publication et mention de la délivrance du brevet: **13.05.2015**
(21) Numéro de dépôt: 08291185.0
(22) Date de dépôt: 15.12.2008
(51) Int. Cl.: C01B 33/22, C01B 33/24, C01B 33/26, C08G 77/02, C09K 11/02, C09K 11/06, D21H 21/30

(54) **Utilisation d'un polymère organosilicate métallique pour la protection de composés sensibles à l'oxydation et/ou aux rayonnements électromagnétiques**
Verwendung eines metallischen Organosilikat-Polymers zum Schutz von Bauteilen, die empfindlich auf Oxidation und/oder elektromagnetische Strahlung reagieren
Use of a metallic organosilicate polymer for the protection of compounds that are sensitive to oxidation and/or electromagnetic radiation

(30) Priorité: 19.12.2007 FR 0708903
(43) Date de publication de la demande: 24.06.2009
(73) Titulaire: Commissariat à l'Énergie Atomique et aux Énergies Alternatives, 75015 Paris (FR)
(72) Inventeur: Poncelet, Olivier, 38000 Grenoble (FR); Raccurt, Olivier, 38730 Chelieu (FR); Renard, Olivier, 38120 Fontanil-Cornillon (FR); Samuel, Jorice, 74000 Annecy (FR)
(74) Mandataire: Noel, Chantal Odile

(56) Documents cités:
- WO-A-02/46345
- US-A- 4 209 555
- US-A- 4 545 914
- WHILTON N T ET AL: "Hybrid lamellar nanocomposites based on organically functionalized magnesium phyllosilicate clays with interlayer reactivity" 1 janvier 1998 (1998-01-01), JOURNAL OF MATERIALS CHEMISTRY, THE ROYAL SOCIETY OF CHEMISTRY, CAMBRIDGE, GB, PAGE(S) 1927 - 1932 , XP002165899 ISSN: 0959-9428 * le document en entier *
- AVINASH J PATIL ET AL: "SYNTHESIS AND SELF-ASSEMBLY OF ORGANOCLAY-WRAPPED BIOMOLECULES" 1 janvier 2004 (2004-01-01), ANGEWANDTE CHEMIE. INTERNATIONAL EDITION, WILEY VCH VERLAG, WEINHEIM, PAGE(S) 4928 - 4933 , XP002477775 ISSN: 1433-7851 * le document en entier *
- KIKKAWA ET AL: "New developments in polymer photostabilization", POLYMER DEGRADATION AND STABILITY, BARKING, GB, vol. 49, no. 1, 1 January 1995 (1995-01-01), pages 135-143, XP027286621, ISSN: 0141-3910 [retrieved on 1995-01-01]

## Description

L'invention concerne l'utilisation d'un polymère organosilicate métallique pour la protection de composés sensibles à l'oxydation et/ou aux rayonnements électromagnétiques, contre l'oxydation et/ou les rayonnements électromagnétiques.

De nombreux composés ont des propriétés qui se dégradent par oxydation ou par une exposition aux rayonnements électromagnétiques, en particulier lors d'une exposition aux rayonnements UV.

Il en est ainsi des composés de la famille des benzotriazoles et en particulier du 2-(2'-hydroxy-5'-méthylphényl) benzotriazole.

En effet, ce composé est un excellent protecteur contre les rayonnements UV car sous une irradiation par les UV, la liaison hydrogène lui conférant son aromaticité se rompt et ainsi il absorbe les photons UV. Comme de plus, dans le temps, la liaison hydrogène se reforme, c'est un composé absorbant les photons UV qui se régénère.

Mais ce composé est très sensible à l'oxydation et se dégrade et perd ainsi ses propriétés de protection contre les rayonnements UV.

D'autres composés sensibles à l'oxydation et/ou aux rayonnements électromagnétiques sont les composés fluorophores.

Les composés fluorophores sont utilisés en particulier pour le marquage, de papier, textiles, soit anti-contrefaçon, soit dans des buts d'authentification, soit pour simplement identifier la date de fabrication du papier ou du tissu, ou encore pour identifier le fabricant.

Les papiers, en particulier pour acte authentique ainsi que les textiles ont une très longue durée de vie, supérieure à quinze ans.

C'est pourquoi la résistance à l'oxydation et au photo-vieillissement des marqueurs utilisés est importante.

On a utilisé dans ce but de marquage des terres rares qui sont des composés fluorophores inorganiques.

Mais les terres rares sont facilement identifiées par une simple analyse, ce qui fait qu'un marquage obtenu avec des terres rares peut être facilement reproduit.

Les composés fluorophores organiques, eux, ne sont pas facilement identifiables par une simple analyse.

Ces composés organiques fluorophores sont aussi utilisés pour le marquage biologique de réactions biologiques.

Mais ces composés sont sensibles à l'oxydation par l'oxygène, l'ozone, les NOx, en particulier.

On les a donc utilisés en présence d'agents antioxydants qui ont pour but de piéger l'oxygène sous toutes ses formes.

Mais l'efficacité de l'agent antioxydant cesse lorsque toutes les molécules piégeant l'oxygène ont été consommées par les molécules d'oxygène présentes.

Par ailleurs, et cela est un inconvénient en particulier pour les papiers et les textiles, les composés fluorophores organiques ont un autre inconvénient : ils sont très sensibles aux rayonnements électromagnétiques tels que les UV, le visible et le proche infrarouge.

A l'heure actuelle, pour les protéger, on utilise des additifs organiques ou inorganiques qui vont filtrer le rayonnement électromagnétique mais qui vont également atténuer le phénomène de fluorescence.

Mais finalement, il est également connu que les phénomènes d'oxydation ou de photo-oxydation et de vieillissement par exposition au rayonnement électromagnétique se superposent et/ou agissent en synergie pour dégrader les composés fluorophores organiques, que ce soit en solution ou sur divers supports.

Par ailleurs, on connait une famille de composés appelés indifféremment métal organosilicate, métal phyllosilicate argile, polymère organosilicate métallique ou sel de polysilsesquioxane.

Par exemple, la demande de brevet US 7 132 165 B2 décrit la fabrication de composés de ce type à partir de surfactants amines ou d'agents de structuration. Ces composés sont décrits comme étant des composés mésoporeux à base de silice lamellaire ayant une stabilité thermique et hydrothermique élevée.

Ces composés sont également décrits par L. Ukrainczyk et al. dans "Template Synthesis and Characterization of Layered AI- and Mg-Silsesquioxanes", J. Phys. Chem. B 1997, 101, 531-539 et par WO 02/46345 A1.

Une méthode de préparation de ces composés est décrite dans ce document : les composés silsesquioxanes ont été préparés par précipitation à température ambiante par addition d'une base aqueuse à une solution d'alcool contenant un mélange d'AlCl₃ ou de MgCl₂ et d'un trialcoxysilane avec une fonctionnalité *n*-dodécyle, *n*-octyle, *n*-pentyle, 3-méthacryloxypropyle, isobutyle ou phényle.

Ces composés sont décrits comme utilisables en tant qu'absorbants, barrières environnementales, charges de polymères, supports catalytiques ou capteurs chimiques.

Nicola T. Whilton et al., dans "Hybrid lamellar nanocomposites based on organically functionalized magnesium phyllosilicate clays with interlayer reactivity", J. Mater. Chem., 1998, 8(8), 1927-1932, décrivent également la préparation de tels composés par addition d'organotrialcoxysilane à une solution de MgCl₂.6H₂O dans de l'éthanol et précipitation par une solution d'hydroxyde de sodium.

Cependant, dans ce document aucune application n'est décrite ou suggérée pour ces composés.

Le brevet US n°5 342 876 décrit aussi un procédé pour produire de tels composés qui sont décrits comme étant des granulés de silice sphérique et poreuse qui ont une excellente aptitude à se disperser dans les résines et permettent ainsi l'obtention de films ayant une excellente transparence, résistance à l'écaillement et qui peuvent être utilisés en tant que pièges d'odeurs et en tant qu'agent de contrôle de l'exsudation.

L'invention a pour but de pallier la sensibilité à l'oxydation et/ou à la dégradation par tous rayonnements électromagnétiques, et en particulier les UV, de composés sensibles à l'oxydation et/ou à la dégradation par les rayonnements électromagnétiques.

En particulier, l'invention a pour but de pallier les inconvénients des fluorophores organiques et de fournir une composition fluorescente qui soit résistante à l'oxydation et/ou à la dégradation par tout rayonnement électromagnétique, et en particulier les UV, tout en n'étant pas facilement identifiable par une analyse simple.

Mais l'invention a également pour but de fournir une composition de protection contre les UV qui soit régénérable et non dégradée par l'oxydation dans le temps.

A cet effet, l'invention propose d'utiliser au moins un polymère organosilicate métallique, sous forme de particules, ayant la formule II suivante :

Formule II : R₈Si₈M₆O₁₆(OH)_{y},

dans laquelle :
- chaque R est choisi indépendamment des autres dans le groupe formé par un groupe alkyle linéaire ou ramifié, substitué ou non substitué, un groupe alcényle linéaire ou ramifié, substitué ou non substitué, un groupe aryle substitué ou non substitué, et un groupe benzyle substitué on non substitué,
- y ≥ 4,
- M est choisi dans le groupe formé par le calcium, le magnésium, le zinc, le strontium et les mélanges de ceux-ci, et le rapport molaire Si/M est compris entre 1,8 et 1,3 inclus,
   pour la protection contre l'oxydation et/ou les rayonnements électromagnétiques d'un composé sensible à l'oxydation et/ou aux rayonnements électromagnétiques.

De préférence, chaque R est choisi, indépendamment des autres, parmi un groupe méthyle substitué ou non substitué, un groupe éthyle substitué ou non substitué, un groupe n-propyle substitué ou non substitué, et un groupe benzyle substitué ou non substitué.

Lorsque R est substitué, il est de préférence substitué par au moins un groupe amino, un atome d'halogène, un groupe éther, un groupe ester, un groupe hydroxyle, un groupe acrylate, un groupe époxy, un groupe alkyle, un groupe alkylacrylate, un groupe aminoalkyle ou un groupe chloroalkyle.

Dans un mode de réalisation préféré, le polymère organosilicate métallique a la formule II dans laquelle M est le zinc ou le magnésium, et chaque R est un groupement 3-aminopropyle.

Dans un autre mode de réalisation préféré, le polymère organosilicate métallique a la formule II dans laquelle M est le zinc ou le magnésium, et chaque R est un groupement NH₂(CH₂)₂NH(CH₂)₃.

Dans une première variante de l'utilisation de l'invention, le composé sensible à l'oxydation et/ou aux rayonnements électromagnétiques est un composé fluorophore organique.

Dans ce cas, le composé fluorophore organique est de préférence choisi dans le groupe formé par la rhodamine, la fluorescéine, les porphyrines et leurs mélanges.

Dans une seconde variante de l'utilisation de l'invention, le composé sensible à l'oxydation et/ou aux rayonnements électromagnétiques est un composé benzotriazole.

Plus préférablement, ce composé benzotriazole est le 2-(2'-hydroxy-5-'méthylphényl) benzotriazole et le polymère organosilicate métallique a la formule II dans laquelle M est le zinc (Zn) et quatre groupes R sont des groupements NH₂(CH₂)₃ et quatre groupes R sont des groupements C₆H₅.

Pour ce faire on prépare une composition fluorescente caractérisée en ce qu'elle comprend :
- des particules d'au moins un composé organique fluorophore, et
- des particules d'au moins un composé polymère organosilicate métallique ayant la formule II suivante :

   Formule II : R₈Si₈M₆O₁₆(OH)_{y},
dans laquelle :
- chaque R est choisi, indépendamment des autres, dans le groupe formé par un groupe alkyle linéaire ou ramifié, substitué ou non substitué, un groupe alcényle linéaire ou ramifié, substitué ou non substitué, un groupe aryle substitué ou non substitué, et un groupe benzyle substitué on non substitué,
- y ≥ 4,
- dans la formule II, M est choisi dans le groupe formé par le calcium, le magnésium, le zinc, le strontium et les mélanges de ceux-ci, et le rapport molaire Si/M est compris entre 1,8 et 1,3 inclus.

De préférence, dans la composition fluorescente selon l'invention, le composé organique fluorophore est choisi dans le groupe formé par la rhodamine, la fluorescéine, les porphyrines, et leurs mélanges.

Quant à chaque groupement R, il est choisi, indépendamment des autres, parmi un groupe méthyle substitué ou non substitué, un groupe éthyle substitué ou non substitué, un groupe *n*-propyle substitué ou non substitué, et un groupe benzyle substitué ou non substitué.

Lorsque R est substitué, il est de préférence substitué par au moins un groupe amino, un atome d'halogène, un groupe éther, un groupe ester, un groupe hydroxyle, un groupe acrylate, un groupe époxy, un groupe alkyle, un groupe alkylacrylate, un groupe aminoalkyle ou un groupe chloroalkyle.

De préférence, dans la composition fluorescente de l'invention, le polymère organosilicate métallique a la formule II dans laquelle M est le magnésium ou le zinc, et chaque R est un groupement 3-aminopropyle.

Dans une autre variante de la composition fluorescente de l'invention, le polymère organosilicate métallique a la formule II dans laquelle M est le magnésium ou le zinc et chaque R est un groupement NH₂(CH₂)₂NH(CH₂)₃.

Dans un mode de mise en oeuvre préféré, la composition fluorescente selon l'invention est sous la forme de particules solides.

Mais dans un autre mode de mise en oeuvre préféré selon l'invention, la composition fluorescente de l'invention est sous la forme d'une dispersion ou d'un sol colloïdal, de préférence en phase aqueuse.

Ainsi peut être préparée une composition de marquage caractérisée en ce qu'elle comprend au moins une composition fluorescente telle que décrite.

Mais l'invention propose aussi une composition de protection contre le rayonnement UV caractérisée en ce qu'elle comprend :
- du 2-(2'-hydroxy-5'-méthylphényl) benzotriazole, et
- des particules d'au moins un polymère organosilicate métallique ayant la formule II suivante :

   Formule II : R₈Si₈M₆O₁₆(OH)_{y},
dans laquelle :
- chaque R est choisi indépendamment des autres dans le groupe formé par un groupe alkyle linéaire ou ramifié, substitué ou non substitué, un groupe alcényle linéaire ou ramifié, substitué ou non substitué, un groupe aryle substitué ou non substitué, et un groupe benzyle substitué on non substitué,
- y ≥ 4,
- dans la formule II, M est choisi dans le groupe formé par le calcium, le magnésium, le zinc, le strontium et les mélanges de ceux-ci, et le rapport molaire Si/M est compris entre 1,8 et 1,3 inclus.

Dans la composition de protection contre le rayonnement UV selon l'invention, chaque R est de préférence choisi, indépendamment des autres, parmi un groupe méthyle substitué ou non substitué, un groupe éthyle substitué ou non substitué, un groupe *n*-propyle substitué ou non substitué et un groupe benzyle substitué ou non substitué.

Lorsque R est substitué, il est de préférence, substitué par au moins un groupe amino, un atome d'halogène, un groupe éther, un groupe ester, un groupe hydroxyle, un groupe acrylate, un groupe époxy, un groupe alkyle, un groupe alkylacrylate, un groupe aminoalkyle ou un groupe chloroalkyle.

Une composition de protection contre le rayonnement UV selon l'invention particulièrement préférée est une composition dans laquelle le polymère organosilicate métallique a la formule II dans laquelle M est le zinc (Zn) et quatre groupes R sont des groupes NH₂(CH₂)₂NH(CH₂)₃ et quatre groupes R sont des groupes C₆H₅.

L'invention sera mieux comprise et d'autres caractéristiques et avantages de celle-ci apparaitront plus clairement à la lecture de la description explicative qui suit.

L'invention repose sur la découverte que des particules d'un polymère organosilicate métallique ayant la formule II suivante :

Formule II : R₈Si₈M₆O₁₆(OH)_{y},

ont des propriétés de protection contre l'oxydation et/ou les rayonnements électromagnétiques, en particulier les rayonnements UV, de composés sensibles à cette oxydation et/ou à ces rayonnements.

La formule II représente des composés du type aluminosilicate ou silicate de métal ayant des substituants organiques. Ces composés ont des teneurs en eau variables car ils sont fortement hygroscopiques. C'est pourquoi dans la formule II, la stoechiométrie en ions OH- est indiquée par la variable y.

Dans la formule II, y doit être égal au moins à 4.

Cependant, dans ces composés, le rapport molaire Si/M, dans la formule II, est parfaitement défini. Ce rapport molaire doit être compris entre 1,8 et 1,3 inclus.

Les particules du polymère organisilicate métallique ont une taille d'environ 100 nm.

Les particules du polymère organosilicate métallique ayant la formule II ci-dessus sont formées par des méthodes de co-hydrolyse contrôlée comprenant le traitement d'un ou plus sel de magnésium, de zinc, de calcium, de strontium ou d'aluminium et d'un mélange d'agents de couplage silane de formule RₓSi(OR¹) ₄₋ₓ dans laquelle x vaut entre 1 et 2 inclus et R¹ est un groupe hydrolysable, avec une solution alcaline alcoolique.

Dans certains modes de réalisation, les fonctions R des agents de couplage silane incluent un groupe basique tel qu'un groupe amino et il n'est alors pas nécessaire d'ajouter une solution alcaline alcoolique, bien qu'une petite quantité de base puisse être nécessaire pour faire que la quantité équivalence stoechiométrique désirée de base soit présente. Le rapport molaire métal (un ou plus du magnésium, zinc, calcium, strontium et aluminium) ou Al/Si est de préférence maintenu entre 1 et 0,5 inclus et le rapport molaire alcalin/métal est de préférence maintenu entre 1 et 0,5 inclus.

De préférence, une solution alcoolique d'hydroxyde de sodium, d'hydroxyde de potassium ou d'hydroxyde de lithium de diéthylamine ou de triéthylamine ayant une concentration entre 0,5M et 5M inclus, préférablement d'environ 3M est utilisée.

De préférence, les groupes alcoxy de l'agent de couplage silane (OR¹) sont des groupes propoxy, éthoxy, ou méthoxy.

Quant à chaque groupe R présent dans l'agent de couplage silane, il est choisi, indépendamment des autres, dans le groupe formé par un groupe alkyle à chaîne linéaire ou ramifiée, substitué ou non substitué, un groupe alcényle linéaire ou ramifié, substitué ou non substitué, un groupe aryle substitué ou non substitué ou un groupe benzyle substitué ou non substitué.

Le plus préférablement, chaque R est, indépendamment des autres, un groupe alkyle ou alcényle, chacun linéaire ou ramifié, substitué ou non substitué ou un groupe benzyle substitué ou non substitué.

Le plus préférablement, chaque R est, indépendamment des autres un groupe alkyle ou alcényle en C₁ à C₁₂, plus préférablement, en C₂ à C₈ ou un groupe benzyle, chacun de ces groupes étant substitué ou non substitué.

Le plus préférablement, chaque R est, indépendamment des autres, un groupe méthyle, un groupe éthyle, un groupe n-propyle, un groupe n-butyle, un groupe vinyle ou un groupe benzyle, chacun de ces groupes pouvant être substitué ou non substitué.

Les groupes substituants appropriés du groupe R et spécialement des groupes alkyles et alcényles linéaires ou ramifiés peuvent être tout substituant approprié pour affecter les propriétés d'hydrophilie ou d'hydrophobie désirées.

Par exemple, chaque groupe R peut être substitué avec un groupe basique tel qu'un groupe amino, incluant les substituants diamino et triamino, un atome d'halogène, tel qu'un ou plus atome de fluore, de chlore, de brome ou d'iode, mais préférablement un atome de chlore, un groupe éther, un groupe ester, un groupe hydroxyle, un groupe acrylate tel qu'un groupe méthacrylate, ou tout autre groupe partant ou tout autre groupe réactif qui permettra des modifications supplémentaires tel qu'un groupe époxy ou un groupe aryle, tous deux optionnellement substitués.

Le plus préférablement, le substituant du groupe R est un groupe alkyle, un groupe alkylacrylate, un groupe aminoalkyle, un groupe chloroalkyle ou un groupe vinyle, spécialement un groupe méthyle, un groupe éthyle, un groupe n-propyle, un groupe n-butyle, un groupe propylméthacrylate, un groupe 3-chloropropyle ou un groupe 3-aminopropyle.

Le plus préférablement, R est un groupe (3-aminopropyl)aminoéthyle.

Quant au sel de métal mixte utilisé, il peut être l'un ou plus d'un sel de magnésium, de strontium, de calcium, de zinc ou d'aluminium pour former un composé polymère organosilicate métallique dans lequel le rapport molaire métal/silicium ou aluminium/silicium est compris entre 1,8 et 1,3 inclus.

Le métal est le plus préférablement du magnésium ou du zinc.

Les sels métalliques particulièrement préférés sont les sels chlorure et en particulier, lorsque le métal est le magnésium, le chlorure de magnésium hexahydraté.

La réaction de co-hydrolyse décrite ci-dessus donne des composés polymères organosilicates métalliques utilisés dans l'invention, sous forme de particules, ayant la formule II suivante :

Formule II : R₈Si₈M₆O₁₆(OH)_{y},

dans laquelle :
- chaque R est choisi indépendamment des autres dans le groupe formé par un groupe alkyle linéaire ou ramifié, substitué ou non substitué, un groupe alcényle linéaire ou ramifié, substitué ou non substitué, un groupe aryle substitué ou non substitué, et un groupe benzyle substitué on non substitué,
- y ≥ 4,
- dans la formule II, M est choisi dans le groupe formé par le calcium, le magnésium, le zinc, le strontium et les mélanges de ceux-ci, et le rapport molaire Si/M est compris entre 1,8 et 1,3 inclus.

Les composés polymères organosilicates métalliques préférés utilisés dans l'invention sont des composés ayant la formule II dans laquelle chaque R est un groupe N-(2-aminoéthyl)-3-propylamine ou NH₂(CH₂)₂NH(CH₂)₃, et le métal est Mg ou Zn.

L'addition de nanoparticules des composés polymères organosilicates métalliques de formule II définies ci-dessus permet de stabiliser vis-à-vis de l'oxydation, en particulier en dispersion aqueuse, des composés organiques fluorophores tels que la rhodamine, la fluorescéine, et les porphyrines.

Pour obtenir cette stabilisation, il suffit d'ajouter les nanoparticules d'au moins un composé polymère organosilicate métallique précédemment décrit au composé organique fluorophore.

De préférence, le rapport masse de composé polymère organosilicate métallique/masse de composé organique fluorophore est supérieur ou égal à 0,33. En effet, en dessous de ce rapport, la stabilisation à l'oxydation, et/ou au rayonnement électromagnétique est moins efficace.

Le rapport maximal sera déterminé par l'homme du métier.

En effet, les particules de composés polymères organosilicates métalliques sont transparentes et très petites, de l'ordre de 10 à 100nm. Il est possible d'en mettre une grande quantité sans affecter les propriétés optiques du composé organique fluorophore.

Cependant, pour des applications textiles, le toucher peut être affecté, de sorte que dans ce cas, le rapport masse de composé polymère organosilciate métallique/masse de composé fluorophore organique est de préférence maintenu inférieur ou égal à 1,33 car ensuite, le tissu peut devenir rêche.

Mais, l'addition de nanoparticules des composés polymères organosilicates métalliques de formule II selon l'invention permet également de stabiliser vis-à-vis de l'oxydation, en particulier en solution, des composés ayant des propriétés de protection contre le rayonnement UV mais très sensibles à l'oxydation, en particulier ceux de la famille des benzotriazoles et plus particulièrement le 2-(2'-hydroxy-5'-méthylphényl) benzotriazole.

Dans ce cas, un polymère organisilicate métallique préféré est le polymère ayant la formule II dans laquelle M est le zinc (Zn) et quatre groupes R sont des groupes NH₂(CH₂)₂NH(CH₂)₃ et quatre groupes R sont des groupes C₆H₅.

Afin de mieux faire comprendre l'invention, on va maintenant en décrire, à titre d'exemples illustratifs et non limitatifs, plusieurs modes de mise en oeuvre.

### Exemple 1 : Synthèse du composé polymère organosilicate métallique de formule II dans laquelle M est le magnésium et R est un groupement 3-aminopropyle.

1,2 moles de MgCl₂.6H₂O sont solubilisés dans 2900g d'éthanol, 312g de (3-aminopropyl)triéthoxysilane sont rapidement ajoutés. Rapidement un précipité blanc se forme, le milieu réactionnel est agité à température ambiante durant 24H. Après filtration, le précipité blanc est lavé avec 2000g d'éthanol. La poudre blanche obtenue est séchée à température ambiante pendant deux jours. Le rendement calculé sur le magnésium est de 48%. Le rapport molaire Mg/Si mesuré par ICP-AES (Inductively Coupled Plasma Atomic Emission Spectrophotometry) est de 0,6. La diffraction des rayons X montre que le produit est faiblement cristallisé. Le composé polymère organosilicate métallique obtenu est entièrement dispersable dans l'eau, il peut être lavé par dialyse ou par nano et/ou ultrafiltration. La taille des particules mesurée par spectroscopie de corrélation de photons se situe entre 20 et 30nm.

### Exemple 2 : Synthèse du polymère organosilicate métallique de formule II dans laquelle M est Zn et R est un groupement 3-aminopropyle

1,2 moles de ZnCl₂.6H₂O sont solubilisés dans 2900g d'éthanol, 312g de (3-aminopropyl)triéthoxysilane sont rapidement ajoutés. Rapidement un précipité blanc se forme, le milieu réactionnel est agité à température ambiante durant 24H. Après filtration, le précipité blanc est lavé avec 2000g d'éthanol. La poudre blanche obtenue est séchée à température ambiante pendant deux jours. Le rendement calculé sur le magnésium est de 49%. Le rapport molaire Zn/Si mesuré par ICP-AES (Inductively Coupled Plasma Atomic Emission Spectrophotometry) est de 0,57. La diffraction des rayons X montre que le produit est faiblement cristallisé. Le composé polymère organosilicate métallique obtenu est entièrement dispersable dans l'eau, il peut être lavé par dialyse ou par nano et/ou ultrafiltration. La taille des particules mesurée par spectroscopie de corrélation de photons se situe entre 20 et 30nm.

### Exemple 3 : Synthèse du composé polymère organosilicate métallique de formule II dans laquelle M est Mg et R est un groupement N-(aminoéthyle)-3-propylamine ou NH₂(CH₂)₂NH(CH₂)₃.

On solubilise 0,2 mole de MgCl₂.6H₂O dans 500g d'éthanol, puis on ajoute rapidement 0,2 mole de N-[3-triméthoxysilyl)propyl]éthylènediamine. Rapidement un précipité blanc se forme, le milieu réactionnel est agité à température ambiante durant 24H. Après filtration, le précipité blanc est lavé avec 500g d'éthanol. La poudre blanche obtenue est séchée à température ambiante pendant deux jours. Le rendement calculé sur le magnésium est de 48%. Le rapport molaire Mg/Si mesuré par ICP-AES (Inductively Coupled Plasma Atomic Emission Spectrophotometry) est de 0,58. La diffraction des rayons X montre que le produit est faiblement cristallisé. Le composé polymère organosilicate métallique obtenu est entièrement dispersable dans l'eau, il peut être lavé par dialyse ou par nano et/ou ultrafiltration. La taille des particules mesurée par spectroscopie de corrélation de photons se situe entre 20 et 40nm.

### Exemple 4 : Synthèse du composé polymère organosilicate métallique de formule II dans laquelle R est N-(2-aminoéthyl)-3-propylamine ou NH₂(CH₂)₂NH(CH₂)₃ et M est Zn.

On solubilise 0,2 mole de ZnCl₂.6H₂O dans 500g d'éthanol, et on ajoute rapidement 0,2 mole de N-[3-triméthoxysilyl)propyl]éthylènediamine. Rapidement un précipité blanc se forme, le milieu réactionnel est agité à température ambiante durant 24H. Après filtration, le précipité blanc est lavé avec 500g d'éthanol. La poudre blanche obtenue est séchée à température ambiante pendant deux jours. Le rendement calculé sur le magnésium est de 43%. Le rapport molaire Zn/Si mesuré par ICP-AES (Inductively Coupled Plasma Atomic Emission Spectrophotometry) est de 0,57. La diffraction des rayons X montre que le produit est faiblement cristallisé. Le composé polymère organosilicate métallique obtenu est entièrement dispersable dans l'eau, il peut être lavé par dialyse ou par nano et/ou ultrafiltration. La taille des particules mesurée par spectroscopie de corrélation de photons se situe entre 15 et 30nm.

### Exemple 5 : Stabilisation de la rhodamine 6G contre l'oxydation et la photo-oxydation.

150mg de rhodamine 6G sont dispersés dans 150ml d'eau osmosée. Cette dispersion est alors divisée en trois, on ajoute alors à chacune des dispersions 5ml d'une solution ou dispersion 1, 2 ou 3 comme définie ci-après :
- dispersion 1 : 5ml d'une dispersion aqueuse du polymère organosilicate métallique (10g/l) obtenu dans l'exemple 1. On obtient la dispersion 5A,
- solution 2 : 5ml d'eau osmosée. On obtient la dispersion 5B,
- dispersion 3 : 5ml d'une dispersion aqueuse de silice colloïdale (20nm de diamètre) LUDOX^{®} TM-40 (10g/l). On obtient la dispersion 5C.

Le pH des trois dispersions est mesuré, il est de 8,5 pour les dispersions 5A et 5C. Il est amené à 8,5 pour la dispersion 5B par ajout de NaOH.

Les trois dispersions sont conditionnées dans des récipients identiques laissant un ciel gazeux minimal de façon à limiter les phénomènes d'oxydation.

Les densités optiques (D.O) des trois dispersions sont mesurées sur un spectromètre UV-Visible :
- dès conditionnement,
- après conditionnement à température ambiante à l'abri de la lumière pendant 24H,
- après exposition à la lumière d'un néon pendant 12H, 24H, 36H et enfin 72H.

Les résultats sont reportés dans le tableau 1 suivant :

**Tableau 1**

| **Échantillons** | **D. O dès conditionnement** | **D.O après 24 H à l'abri de la lumière** | **D. O après 12H à la lumière d'un néon** | **D.O après 24H à la lumière d'un néon** | **D.O après 36H à la lumière d'un néon** | **D.O après 72H à la lumière d'un néon** |
|---|---|---|---|---|---|---|
| Dispersion 5A | 2,4 | 2,2 | 2,0 | 2,0 | 1,9 | 1,8 |
| Dispersion 5B | 2,4 | 1,8 | 1,5 | 1,3 | 1 | 0,4 |
| Dispersion 5C | 2,4 | 1,8 | 1,4 | 1,2 | 0,9 | 0,3 |

La dispersion 5A contenant le polymère organosilicate métallique a peu évolué, la perte de densité optique n'est que de 25% comparée à plus de 80% pour les dispersions 5B et 5C. La dispersion 5C montre qu'il ne suffit pas que l'on soit en présence de nanoparticules pour observer un effet de stabilisation du composé fluorophore organique puisque cette dispersion contient également des nanoparticules de 20nm de diamètre.

Ces résultats montrent également que même s'il a été pris soin de limiter les phénomènes d'oxydation en limitant le ciel gazeux lors du flaconnage, il y a eu une perte de densité optique malgré un stockage à l'abri de la lumière, mais que cette perte est très faible avec la composition de l'invention.

Les mêmes résultats sont obtenus sous exposition des dispersions 5A à 5C à une lampe UV de 4W centrée à 365nm.

### Exemple 6 : Test d'oxydation à l'air d'une solution de rhodamine 6G.

150mg de rhodamine 6G sont dispersés dans 150ml d'eau osmosée. Cette dispersion est alors divisée en trois, on ajoute alors à chacune des dispersions 5ml d'une solution 1, 2 ou 3 comme définies ci-après :
- dispersion 1 : 5ml d'une solution aqueuse du polymère organosilicate métallique (10g/l) obtenu dans l'exemple 1. On obtient la dispersion 6A,
- solution 2 : 5ml d'eau osmosée. On obtient la dispersion 6B,
- dispersion 3: 5ml d'une solution aqueuse de silice colloïdale (20nm de diamètre) LUDOX^{® T}M-40 (10g/l). On obtient la dispersion 6C.

Le pH des trois dispersions est mesuré, il est de 8,5 pour les solutions 6A et 6C. Il est amené à 8,5 pour la dispersion 6B par ajout de NaOH.

Les trois dispersions sont conditionnées dans des récipients à l'abri de la lumière dans lesquels on fait buller de l'air à température ambiante sous agitation pendant 4H. Chacun des récipients est surmonté d'un condenseur, de façon à minimiser l'évaporation. Les densités optiques des trois dispersions sont mesurées par spectrométrie UV-Visible.

Les résultats sont reportés dans le tableau 2.

**Tableau 2**

| **Échantillons** | **D. O dès conditionnement** | **D.O après 4 H à l'abri de la lumière sous bullage d'air** |
|---|---|---|
| **Dispersion 6A** | 2,3 | 1,7 |
| **Dispersion 6B** | 2,3 | 0,8 |
| **Dispersion 6C** | 2,3 | 0,75 |

Ces résultats montrent sans ambiguïté que l'oxydation participe à la décoloration des solutions. Là encore la présence du polymère organosilicate métallique limite ce phénomène.

### Exemple 7 : Stabilisation de la rhodamine 6G sous forme de couche mince

150mg de rhodamine 6G sont dispersés dans 150ml d'eau osmosée. Cette dispersion est alors divisée en trois, on ajoute alors à chacune des dispersions 5ml d'une solution ou dispersion 1 ou 2 ou 3 définies ci-après :
- dispersion 1 : 5ml d'une dispersion aqueuse du polymère organosilicate métallique (10g/l) obtenu dans l'exemple 1. On obtient la dispersion 7A,
- solution 2 : 5ml d'eau osmosée. On obtient la dispersion 7B,
- dispersion 3 : 5ml d'une dispersion aqueuse de silice colloïdale (20nm de diamètre) LUDOX^{®} TM-40 (10g/l). On obtient la dispersion 7C.

Le pH des trois dispersions est mesuré, il est de 8,5 pour les dispersions 7A et 7C. Il est amené à 8,5 pour la dispersion 7B par ajout de NaOH.

On ajoute à chacune des dispersions 10ml d'une dispersion aqueuse d'alcool polyvinylique (4% massique) préalablement dégazée sous argon. On dépose un film de chaque dispersion par trempage (dip-coating) sur des lames de verre préalablement dégraissées. L'opération est répétée trois fois pour chacune des dispersions.

Les densités optiques des dépôts sur les plaques sont mesurées par spectrométrie UV-Visible. Les films obtenus sont parfaitement transparents. Ils sont exposés à température ambiante sous lumière pendant 12H et 24H.

Les résultats sont reportés dans le tableau 3 ci-après (valeur moyenne de densité optique).

**Tableau 3**

| **Échantillons** | **D. O dès conditionnement** | **D.O après 12H à la lumière d'un néon** | **D.O après 24H à la lumière d'un néon** |
|---|---|---|---|
| **Dispersion 7A** | 5 | 5 | 4,9 |
| **Dispersion 7B** | 5,1 | 3 | 1 |
| **Dispersion 7C** | 5,1 | 3 | 1 |

Sous forme de couche mince, le composé fluorophore organique, qui n'est plus mobile, reste au contact du polymère organosilicate métallique, les phénomènes d'oxydation sont complètement annihilés. En dispersion il y a toujours un équilibre entre le composé fluorophore organique adsorbé et le polymère organosilicate métallique, et le composé fluorophore organique libre, une partie du composé fluorophore organique libre peut alors être oxydée, ce qui explique qu'en dispersion même si le polymère organosilicate métallique est très efficace, il ne parvient pas à stopper l'oxydation mais permet de la ralentir très nettement.

### Exemple 8 : Stabilisation de la rhodamine 6G à l'oxydation par un composé polymère organosilicate métallique à coeur zinc

Les mêmes essais ont été reproduits mais avec le polymère organosilicate métallique obtenu à l'exemple 2.

150mg de rhodamine 6G sont dispersés dans 150ml d'eau osmosée. Cette dispersion est alors divisée en trois, on ajoute alors à chacune des dispersions 5ml d'une solution ou dispersion 1' ou 2' ou 3' définies ci-après :
- dispersion 1': 7ml d'une dispersion aqueuse du composé polymère organosilicate métallique obtenu à l'exemple 2 (10g/l). On obtient la dispersion 8A
- solution 2' : 5ml d'eau osmosée. On obtient la dispersion 8B
- dispersion 3' : 5ml d'une dispersion aqueuse de silice colloïdale (20nm de diamètre) LUDOX^{®} TM-40 (10g/l). On obtient la dispersion 8C.

Le pH des trois dispersions est mesuré, il est de 8,5 pour les dispersions 8A et 8C. Il est amené à 8,5 pour la dispersion 8B par ajout de NaOH.

On ajoute à chacune des dispersions 10ml d'une solution aqueuse d'alcool polyvinylique (4% massique) préalablement dégazée sous argon.

Chacune des dispersions obtenues avec la dispersion 8A est diluée par 2 par ajout d'eau osmosée. On dépose alors un film de chaque dispersion par trempage (dip-coating) sur des lames de verre préalablement dégraissées. L'opération est répétée trois fois pour chacune des dispersions.

Les densités optiques des dépôts sur les plaques sont mesurées par spectrométrie UV-Visible. Les films obtenus sont parfaitement transparents. Ils sont exposés à température ambiante à la lumière d'un néon pendant 12H et 24H.

Les résultats sont reportés dans le tableau 4 suivant (valeur moyenne de densité optique).

**Tableau 4**

| **Échantillons** | **D. O dès conditionnement** | **D.O après 12H à la lumière d'un néon** | **D.O après 24H à la lumière d'un néon** |
|---|---|---|---|
| **Dispersion 8A** | 6 | 6 | 5,9 |
| **Dispersion 8B** | 5,9 | 3,8 | 2 |
| **Dispersion 8C** | 5,9 | 4,2 | 3 |

On voit à partir du tableau 4 que le polymère organosilicate métallique obtenu à l'exemple 2 montre des propriétés similaires à celles du polymère organosilicate métallique obtenu à l'exemple 1.

On obtient des résultats similaires avec des polymères organosilicates métalliques dans lesquels M est le magnésium ou le zinc, et les groupes R sont des groupements N-(2-aminoéthyl)-3-propylamine ou NH₂(CH₂)₂NH(CH₂)₃ au lieu de groupements 3-aminopropyle ou NH₂(CH₂)₃.

50mg de polymère organosilicate métallique sont suffisants pour stabiliser 150mg de composé fluorophore organique.

Sans vouloir être liés par cette théorie, on pense que la stabilisation est due à la formation de l'auto-assemblage de quelques molécules des composés fluorophores sur la surface du polymère organosilicate métallique formant ainsi un proto-pigment nettement plus stable à l'oxydation et à la photo-oxydation que le composé fluorophore sous forme moléculaire. En dessous du ratio massique polymère organosilicate métallique/composé fluorophore de 0,33, la stabilisation est beaucoup moins efficace. Les polymères organosilicates métalliques étant transparents et très petits, on peut en mettre une grande quantité sans affecter les propriétés optiques. Pour des applications textiles, le toucher peut être affecté, le ratio polymère organosilicate métallique/composé fluorophore est de préférence inférieur ou égale à 1,33 car au-delà le tissu devient rêche.

On obtient des résultats similaires avec les composés polymères organosilicates métalliques obtenus aux exemples 3 et 4.

De plus, on peut neutraliser les dispersions de composition fluorescente selon l'invention par ajout d'acide chlorhydrique sans affecter les propriétés de stabilisation.

Les mêmes propriétés de stabilisation ont été obtenues avec la fluorescéine bien que l'effet soit moins remarquable car ce composé fluorophore semble moins sensible à l'oxydation et au rayonnement électromagnétique.

Ainsi, la composition fluorescente de l'invention peut être utilisée aussi bien sous forme d'une dispersion ou d'un sol colloïdal, en particulier en phase aqueuse, que sous forme solide.

Cette caractéristique est particulièrement intéressante, en particulier pour une utilisation en tant que composition de marquage, soit pour déterminer l'origine du produit, soit pour déterminer la date de fabrication du produit, en particulier de papiers officiels ou de textiles, soit encore pour des buts de marquage anti-contrefaçon.

Ainsi, la composition fluorescente de l'invention peut être utilisée pour marquer des papiers ou des textiles ou tout autre composant sous la forme de code-barres ou de motifs, ou encore d'associations de motifs de couleurs différentes, en particulier en utilisant une composition fluorescente selon l'invention contenant de la fluorescéine, une composition fluorescente selon l'invention contenant une porphyrine, et une composition selon l'invention comprenant de la rhodamine et en jouant sur les motifs obtenus grâce à ces trois compositions.

Ainsi l'invention concerne également une composition de marquage comprenant au moins une composition fluorescente selon l'invention, comme précédemment décrit.

### Exemple 9 : Synthèse du polymère organosilicate métallique de formule II dans laquelle M est le zinc (Zn) et quatre groupes R sont des groupes NH₂(CH₂)₃ et quatre groupes R sont des groupes C₆H₅.

On solubilise 0,0191 mole de ZnCl₂.6H₂O dans 200g d'éthanol, puis un mélange équimolaire de (3-aminopropyl)triéthoxysilane et de phényltriéthoxysilane (0,00955/0,00955) dans 20g d'EtOH est rapidement ajouté. Rapidement la solution s'opacifie, on ajoute alors 0,0095 mole de NaOH dans 20g d'EtOH. Le milieu réactionnel est agité à température ambiante durant 24H. Après filtration, le précipité blanc est lavé avec 200g d'éthanol. La poudre blanche est séchée à température ambiante pendant deux jours. Le rendement calculé sur le magnésium est de 38%. Le rapport molaire Zn/Si mesuré par ICP-AES (Inductively Coupled Plasma Atomic Emission Spectrophotometry) est de 0,7. La diffraction des rayons X montre que le produit est faiblement cristallisé. Le polymère organosilicate métallique obtenu est entièrement dispersable dans l'eau, il peut être lavé par dialyse ou par nano et/ou ultrafiltration. La taille des particules mesurée par spectroscopie de corrélation de photons se situe entre 20 et 50nm.

### Exemple 10 : Stabilisation du 2-(2'-hydroxy-5'-méthylphényl) benzotriazole.

25ml d'un sol colloïdal aqueux du polymère organosilicate métallique obtenu à l'exemple 9 (10g/l) sont mis sous agitation à température ambiante. On ajoute ensuite 200mg de 2-(2'-hydroxy-5'-méthylphényl) benzotriazole, celui-ci est tout à fait insoluble dans l'eau. La dispersion dans le sol colloïdal est très lente, elle est accélérée quand on irradie le dessus du Bécher avec une lampe UV (4W centrée à 365nm).

La dispersion devient limpide et transparente en quelques minutes. L'irradiation UV rompt la liaison hydrogène qui confère la planéité, donc la délocalisation des électrons et par là même son absorbance dans les UV au 2-(2'-hydroxy-5'-méthylphényl) benzotriazole. Ce dernier se dépolymérise et est rapidement adsorbé sur le polymère organosilicate métallique.

Afin de mesurer la stabilisation du 2-(2'-hydroxy-5'-méthylphényl)benzotriazole à l'oxydation, on fabrique des couches minces de compositions suivantes :
- Composition 10A : on introduit 5 ml de la dispersion de 2-(2'-hydroxy-5'-méthylphényl)benzotriazole obtenue précédemment dans une formulation sol-gel faite d'un mélange alcoolique 0,1M de quatre équivalents molaires de 3-glycidopropyltriméthoxysilane + 1 équivalent molaire de tétraéthyle orthosilicate + 5ml d'H₂O.

On a ainsi substitué les 5ml d'H₂O de la formulation sol-gel du mélange alcoolique 0,1M par 5ml de la dispersion de 2-(2'-hydroxy-5'-méthylphényl)benzotriazole obtenue à cet exemple.
- Composition 10B : on introduit 0,5ml de la dispersion de 2-(2'-hydroxy-5'-méthylphényl)benzotriazole obtenue à cet exemple dans la même formulation sol-gel du mélange alcoolique 0, 1 M que précédemment.

Dans ce cas, seulement 10% des 5ml d'H₂O de cette formulation sol-gel sont remplacés par la dispersion aqueuse de 2-(2'-hydroxy-5'-méthylphényl)benzotriazole obtenue à cet exemple.

Composition 10C: A titre comparatif, on prépare une composition contenant 100 mg de 2-(2'-hydroxy-5'-méthylphényl)benzotriazole non stabilisés par le polymère organosilicate métallique selon l'invention dilué dans de l'alcool polyvinylique (4%), du THF (25ml), et de l'eau (10ml).

Ces compositions sont déposées sur des lames de verre et séchées.

On obtient alors 3 couches minces notées respectivement 10A, 10B et 10C.

Toutes les couches obtenues sont parfaitement transparentes et homogènes.

Toutes les couches obtenues filtrent les UV dans la région de 280 à 380 nm. Le pourcentage absorbé dans le domaine UV est directement proportionnel à la quantité de 2-(2'-hydroxy-5'-méthylphényl)benzotriazole présent.

Les transmittances de ces couches minces transparentes sont mesurées :
- dès leur fabrication,
- après 48 heures à l'abri de la lumière sous hôte aspirante (10m³/h),
- après 24 heures sous irradiation UV (lampe UV de 4W centrée à 365nm) à l'air, et
- après 24 heures sous irradiation UV (lampe UV de 4W centrée à 365nm) sous argon.

Les résultats obtenus sont reportés au tableau 5 ci-après :

**Tableau 5**

| Echantillons | % transmittance dès fabrication | % transmittance après 48 heures à l'abri de la lumière | % transmittance après 24 heures d'exposition aux UV à l'air | % transmittance après 24 heures d'exposition aux UV sous argon |
|---|---|---|---|---|
| Couche mince 10A | 85% | 85% | 85% | 84% |
| Couche mince 10B | 10% | 10% | 10% | 11% |
| Couche mince 10C | 87% | 65% | 60% | 60% |

Ces résultats confirment que le polymère organosilicate métallique de l'invention stabilise le 2-(2'-hydroxy-5'-méthylphényl)benzotriazole contre l'oxydation.

Les tests de l'exemple 10 ont été reproduits en utilisant un polymère organosilicate métallique obtenu selon le procédé décrit à l'exemple 9 mais en utilisant 0,191 mole MgCl₂.6H₂O à la place des 0,0191 moles de ZnCl₂.6H₂O.

Les résultats obtenus en termes de dispersion et de stabilisation à l'oxydation du 2-(2'-hydroxy-5'-méthylphényl) benzotriazole sont identiques.

C'est dire que l'invention n'est nullement limitée à la seule stabilisation à l'oxydation et aux rayonnements électromagnétiques et en particulier aux rayonnements UV, de composés organiques fluorophores ou des membres de la famille des benzotriazoles, mais peut s'appliquer à de nombreux autres composés sensibles à l'oxydation et/ou aux rayonnements électromagnétiques.

Ainsi, elle concerne l'utilisation d'au moins un polymère organosilicate métallique ayant la formule II suivante :

Formule II : R₈Si₈M₆O₁₆(OH)_{y},

dans laquelle :
- chaque R est choisi, indépendamment des autres, dans le groupe formé par un groupe alkyle linéaire ou ramifié, substitué ou non substitué, un groupe alcényle linéaire ou ramifié, substitué ou non substitué, un groupe aryle substitué ou non substitué, et un groupe benzyle substitué on non substitué,
- y ≥ 4,
- dans la formule II, M est choisi dans le groupe formé par le calcium, le magnésium, le zinc, le strontium et les mélanges de ceux-ci, et le rapport molaire Si/M est compris entre 1,8 et 1,3 inclus,
   pour la protection contre l'oxydation et/ou les rayonnements électromagnétiques de composés sensibles à l'oxydation et/ou aux rayonnements électromagnétiques.

De préférence, dans la formule II, chaque R est choisi, indépendamment des autres, parmi un groupe méthyle substitué ou non substitué, un groupe éthyle substitué ou non substitué, un groupe n-propyle substitué ou non substitué, et un groupe benzyle substitué ou non substitué.

Lorsque R est substitué, il est de préférence substitué par un groupe amino, un groupe halogène, un groupe éther, un groupe ester, un groupe hydroxyle, un groupe acrylate, un groupe époxy, un groupe alkyle, un groupe alkylacrylate, un groupe aminoalkyle ou un groupe chloroallkyle.

De préférence, le polymère organosilicate métallique a la formule II dans laquelle M est le magnésium ou le zinc, et R est un groupement 3-aminopropyle.

Dans un autre mode de réalisation préféré de l'utilisation de l'invention, le polymère organosilicate métallique a la formule II dans laquelle M est le magnésium ou le zinc, et chaque groupe R est un groupement N-(2-aminoéthyl)-3-propylamine ou NH₂(CH₂)₂NH(CH₂)₃.

## Revendications

1. Utilisation d'au moins un composé polymère organosilicate métallique, sous forme de particules, ayant la formule Il suivante :
Formule II : R₈Si₈M₆O₁₆(OH)_{y},
dans laquelle :
- R est choisi dans le groupe formé par un groupe alkyle linéaire ou ramifié, substitué ou non substitué, un groupe alcényle linéaire ou ramifié, substitué ou non substitué, un groupe aryle substitué ou non substitué, et un groupe benzyle substitué on non substitué,
- y ≥ 4,
- M est choisi dans le groupe formé par le calcium, le magnésium, le zinc, le strontium et les mélanges de ceux-ci, et
- le rapport molaire Si/M est compris entre 1,8 et 1,3 inclus,
pour la protection contre l'oxydation et/ou les rayonnements électromagnétiques d'un composé sensible à l'oxydation et/ou aux rayonnements électromagnétiques.

2. Utilisation selon la revendication 1 **caractérisée en ce que** chaque R est choisi parmi un groupe méthyle substitué ou non substitué, un groupe éthyle substitué ou non substitué, un groupe n-propyle substitué ou non substitué, un groupe benzyle substitué ou non substitué.

3. Utilisation selon la revendication 1 ou 2 **caractérisée en ce que** lorsque R est substitué, il est substitué par au moins un groupe amino, un atome halogène, un groupe éther, un groupe ester, un groupe hydroxyle, un groupe acrylate, un groupe époxy, un groupe alkyle, un groupe alkylacrylate, un groupe aminoalkyle ou un groupe chloroalkyle.

4. Utilisation selon l'une quelconque des revendications précédentes **caractérisée en ce que** dans la formule II, M est choisi parmi le zinc ou le magnésium, et R est un groupement 3-aminopropyle.

5. Utilisation selon l'une quelconque des revendications 1 à 3 **caractérisée en ce que** dans la formule Il, M est choisi parmi le zinc où le magnésium, et R est un groupement N-(2-aminoéthyl)-3-propylamine.

6. Utilisation selon l'une quelconque des revendications précédentes **caractérisée en ce que** le composé sensible à l'oxydation et/ou aux rayonnements électromagnétiques est un composé fluorophore organique.

7. Utilisation selon la revendication 6 **caractérisée en ce que** le composé fluorophore organique est choisi dans le groupe formé par la rhodamine, la fluorescéine, les porphyrines et leurs mélanges.

8. Utilisation selon l'une quelconque des revendications 1 à 5 **caractérisée en ce que** le composé sensible à l'oxydation et/ou aux rayonnements électromagnétiques est un composé benzotriazole.

9. Utilisation selon la revendication 8 **caractérisée en ce que** le composé benzotriazole est le 2-(2'-hydroxy-5'-méthylphényl) benzotriazole et **en ce que** dans le polymère organosilicate métallique de formule II, M est le zinc (Zn) et quatre groupes R sont des groupes NH₂(CH₂)₃ et quatre groupes R sont des groupes C₆H₅.

## Patentansprüche

1. Verwendung wenigstens einer metallischen Organosilikat-Polymer-Verbindung, in Form von Partikeln, die die folgende Formel II hat:
Formel II: R₈Si₈M₆O₁₆ (OH)_{y}
in der:
- R ausgewählt ist aus der Gruppe, bestehend aus einer substituierten oder nicht substituierten, linearen oder verzweigten Alkylgruppe, einer substituierten oder nicht substituierten, linearen oder verzweigten Alkenylgruppe, einer substituierten oder nicht substituierten Arylgruppe und einer substituierten oder nicht substituierten Benzylgruppe,
- y ≥ 4,
- M ausgewählt ist aus der Gruppe, bestehend aus Calcium, Magnesium, Zink, Strontium und Gemischen dieser, und
- das Molverhältnis Si/M zwischen 1,8 und 1,3, einschließlich, liegt,
für den Schutz einer Verbindung, die gegenüber Oxidation und/oder elektromagnetischer Strahlung empfindlich ist, gegen Oxidation und/oder elektromagnetische Strahlung.

2. Verwendung gemäß Anspruch 1, **dadurch gekennzeichnet, dass** jedes R aus einer substituierten oder nicht substituierten Methylgruppe, einer substituierten oder nicht substituierten Ethylgruppe, einer substituierten oder nicht substituierten n-Propylgruppe, einer substituierten oder nicht substituierten Benzylgruppe ausgewählt ist.

3. Verwendung gemäß Anspruch 1 oder 2, **dadurch gekennzeichnet, dass**, wenn R substituiert ist, es mit wenigstens einer Aminogruppe, einem Halogenatom, einer Ethergruppe, einer Estergruppe, einer Hydroxylgruppe, einer Acrylatgruppe, einer Epoxygruppe, einer Alkylgruppe, einer Alkylacrylatgruppe, einer Aminoalkylgruppe oder einer Chloralkylgruppe substituiert ist.

4. Verwendung gemäß einem der vorangehenden Ansprüche, **dadurch gekennzeichnet, dass** in der Formel II M aus Zink oder Magnesium ausgewählt ist und R eine 3-Aminopropylgruppierung ist.

5. Verwendung gemäß einem der Ansprüche 1 bis 3, **dadurch gekennzeichnet, dass** in der Formel II M aus Zink oder Magnesium ausgewählt ist und R eine N-(2-Aminoethyl)-3-Propylamin-Gruppierung ist.

6. Verwendung gemäß einem der vorangehenden Ansprüche, **dadurch gekennzeichnet, dass** die Verbindung, die gegenüber Oxidation und/oder elektromagnetischer Strahlung empfindlich ist, eine organische Fluorophorverbindung ist.

7. Verwendung gemäß Anspruch 6, **dadurch gekennzeichnet, dass** die organische Fluorophorverbindung aus der Gruppe, bestehend aus Rhodamin, Fluorescein, Porphyrinen und deren Gemischen, ausgewählt ist.

8. Verwendung gemäß einem der Ansprüche 1 bis 5, **dadurch gekennzeichnet, dass** die Verbindung, die gegenüber Oxidation und/oder elektromagnetischer Strahlung empfindlich ist, eine Benzotriazolverbindung ist.

9. Verwendung gemäß Anspruch 8, **dadurch gekennzeichnet, dass** die Benzotriazolverbindung 2-(2'-Hydroxy-5'-methylphenyl)benzotriazol ist und dadurch, dass in dem metallischen Organosilikat-Polymer der Formel II M Zink (Zn) ist und vier Gruppen R NH₂ (CH₂)₃-Gruppen sind und vier Gruppen R C₆H₅-Gruppen sind.

## Claims

1. Use of at least one metal organosilicate polymer compound in the form of particles having formula II below:
Formula II: R₈Si₈M₆O₁ₑ(OGH)_{y},
in which:
- R is selected from the group comprising a linear or branched, substituted or non-substituted alkyl group, a linear or branched, substituted or non-substituted alkenyl group, a substituted or non-substituted aryl group and a substituted or non-substituted benzyl group,
- y ≥ 4,
- M is selected from the group comprising calcium, magnesium, zinc, strontium and mixtures thereof, and
- the molar ratio Si/M is between 1.8 and 1.3 inclusive,
for the protection against the oxidation and/or electromagnetic radiation of a compound sensitive to oxidation and/or electromagnetic radiation.

2. The use as claimed in claim 1, **characterised in that** each R is selected from a substituted or non-substituted methyl group, a substituted or non-substituted ethyl group, a substituted or non-substituted n-propyl group, a substituted or non-substituted benzyl group.

3. The use as claimed in claim 1 or 2, **characterised in that** when R is substituted, it is substituted by at least one amino group, a halogen atom, an ether group, an ester group, a hydroxyl group, an acrylate group, an epoxy group, an alkyl group, an alkylacrylate group, an aminoalkyl group or a chloroalkyl group.

4. The use as claimed in any one of the preceding claims, **characterised in that** in formula II, M is selected from zinc or magnesium and R is a 3-aminopropyl group.

5. The use as claimed in any one of claims 1 to 3, **characterised in that**, in formula II, M is selected from zinc or magnesium and R is an N-(2-aminoethyl)-3-propylamine group.

6. The use as claimed in any one of the preceding claims, **characterised in that** the compound sensitive to oxidation and/or electromagnetic radiation is an organic fluorophore compound.

7. The use as claimed in claim 6, **characterised in that** the organic fluorophore compound is selected from the group comprising rhodamine, fluorescein, porphyrines and mixtures thereof.

8. The use as claimed in any one of claims 1 to 5, **characterised in that** the compound sensitive to oxidation and/or electromagnetic radiation is a benzotriazole compound.

9. The use as claimed in claim 8, **characterised in that** the benzotriazole compound is 2-(2'-hydroxy-5'-methylphenyl) benzotriazole and **in that** in the metal organosilicate polymer based on formula II, M is zinc (Zn) and four R groups are NH₂(CH₂)₃ groups and four R groups are C₆H₅ groups.
